# EUROPÄISCHE PATENTANMELDUNG

(11) **EP 2 570 964 A2**
(43) Veröffentlichungstag der Anmeldung: **20.03.2013**
(21) Anmeldenummer: 12174604.4
(22) Anmeldetag: 02.07.2012
(51) Int. Cl.: G06K 9/00

(54) **Verfahren und Vorrichtung zum Unterscheiden eines selbstleuchtenden Objekts von einem reflektierenden Objekt**

(30) Priorität: 23.08.2011 DE 102011081398
(71) Anmelder: ROBERT BOSCH GMBH, 70442 Stuttgart (DE)
(72) Erfinder: Faber, Petko, 71272 Renningen (DE)

(57) **Zusammenfassung**

Die Erfindung betrifft ein Verfahren (200) und eine Vorrichtung (102) zum Unterscheiden eines selbstleuchtenden Objekts von einem reflektierenden Objekt (300) in einem Erfassungsbereich einer Kamera (106) eines Fahrzeugs (100) mit zumindest einem Scheinwerfer (104), wenn das Objekt von dem Scheinwerfer (104) angestrahlt wird; wobei das Verfahren (200) einen Schritt des Empfangens (202) einer Relativposition des Objekts zu dem Fahrzeug (100) und eines Helligkeitswerts des Objekts von der Kamera (106) umfasst. Weiterhin umfasst das Verfahren einen Schritt des Vergleichens (204) des Helligkeitswerts mit einem an der Relativposition erwarteten Selbstleuchtewert und einem an der Relativposition erwarteten Reflexionswert. Desweiteren umfasst das Verfahren einen Schritt des Klassierens (206) des Objekts als selbstleuchtend, wenn sich der Helligkeitswert innerhalb eines Selbstleuchte-Toleranzbereichs um den Selbstleuchtewert befindet oder als reflektierend, wenn sich der Helligkeitswert innerhalb eines Reflexions-Toleranzbereichs um den Reflexionswert befindet.

## Beschreibung

### Stand der Technik

Die vorliegende Erfindung bezieht sich auf ein Verfahren zum Unterscheiden eines selbstleuchtenden Objekts von einem reflektierenden Objekt in einem Erfassungsbereich einer Kamera eines Fahrzeugs mit zumindest einem Scheinwerfer, auf eine Vorrichtung zum Unterscheiden eines selbstleuchtenden Objekts von einem reflektierenden Objekt in einem Erfassungsbereich einer Kamera eines Fahrzeugs mit zumindest einem Scheinwerfer sowie auf ein entsprechendes Computerprogrammprodukt.

Bei Nacht werden von einer Kamera eines Fahrzeugs fast ausschließlich selbstleuchtende Objekte und reflektierende Objekte erfasst. Die Scheinwerfer des Fahrzeugs erhellen einen vor dem Fahrzeug befindlichen Teil des Bodens, der ebenfalls als reflektierende Fläche erfasst wird. Um Lichtpunkte in einem Bild der Kamera in Abbilder von reflektierenden Objekten, wie Reflektoren von Straßenbegrenzungspfosten und Abbilder von selbstleuchtenden Objekten, wie Fahrzeugscheinwerfern zu trennen, können verschiedene Unterscheidungsmerkmale herangezogen werden.

Beispielsweise beschreibt die DE 10 2008 025 749 A1 ein Verfahren und eine Vorrichtung zum Klassifizieren eines in mindestens einem Bild einer Abbildung des Bereichs vor einem Fahrzeug detektierten Objekts. Eine Verarbeitungseinheit verarbeitet Bilddaten des durch eine Bilderfassungseinheit erfassten Bildes. Die Verarbeitungseinheit berücksichtigt die Lichtverteilung des durch den mindestens einen Frontscheinwerfer des Fahrzeugs abgestrahlten Lichts beim Klassifizieren des Objekts.

### Offenbarung der Erfindung

Vor diesem Hintergrund wird mit der vorliegenden Erfindung ein verbessertes Verfahren zum Unterscheiden eines selbstleuchtenden Objekts von einem reflektierenden Objekt in einem Erfassungsbereich einer Kamera eines Fahrzeugs mit zumindest einem Scheinwerfer, eine verbesserte Vorrichtung zum Unterscheiden eines selbstleuchtenden Objekts von einem reflektierenden Objekt in einem Erfassungsbereich einer Kamera eines Fahrzeugs mit zumindest einem Scheinwerfer sowie schließlich ein entsprechendes verbessertes Computerprogrammprodukt gemäß den Hauptansprüchen vorgestellt. Vorteilhafte Ausgestaltungen ergeben sich aus den jeweiligen Unteransprüchen und der nachfolgenden Beschreibung.

Die Erfindung nutzt aus, dass die Beleuchtungsstärke, die von einer Lichtquelle auf einer Fläche verursacht wird, mit dem Quadrat einer Entfernung der Fläche zur Lichtquelle absinkt. Bei einer Lichtquelle mit einem ungerichteten Abstrahlverhalten sinkt die Beleuchtungsstärke rundum gleichmäßig ab. Bei einer gerichteten Lichtquelle, wie beispielsweise einem Fahrzeugscheinwerfer bildet das abgestrahlte Licht einen Lichtkegel, der eine Lichtverteilung, beispielsweise auf dem Boden, vor dem Scheinwerfer verursacht. Die Lichtverteilung repräsentiert die Beleuchtungsstärke an verschiedenen Orten der Fläche.

Ein reflektierendes Objekt in dem Lichtkegel wird mit einer bestimmten Beleuchtungsstärke beleuchtet, die einer Position des reflektierenden Objekts innerhalb der Lichtverteilung entspricht. Damit wird das reflektierende Objekt selbst zu einer weiteren Lichtquelle, deren Beleuchtungsstärke des von ihr abgestrahlten Lichts wiederum mit dem Quadrat der Entfernung zu dem reflektierenden Objekt abnimmt. Ein Empfänger nahe des Scheinwerfers kann daher nur eine Lichtstärke empfangen, die näherungsweise um die vierte Potenz des Abstands zwischen Scheinwerfer und reflektierendem Objekt geringer ist, als der Lichtstrom, der in Richtung des reflektierenden Objekts von dem Scheinwerfer abgegeben wird. Verstärkt wird dieser Effekt noch durch eine, von einem Einfallswinkel des Lichts auf das reflektierende Objekt abhängige Reflektivität des reflektierenden Objekts. Ein selbstleuchtendes Objekt weist dagegen eine Beleuchtungsstärke auf, die nur mit dem Quadrat einer Entfernung zu dem selbstleuchtenden Objekt sinkt.

Die Erfindung basiert auf der Erkenntnis, dass unter Verwendung einer vorbekannten Lichtverteilung vor einem Scheinwerfer ein erreichbarer Helligkeitswert eines reflektierenden Objekts für verschiedene Positionen der Lichtverteilung vorgegeben ist, ebenso, wie ein erreichbarer Helligkeitswert eines selbstleuchtenden Objekts für die verschiedenen Positionen der Lichtverteilung vorgegeben ist. Ein Vergleich der beiden erreichbaren Helligkeitswerte an einer der Positionen mit einem ermittelten Helligkeitswert eines unbekannten Objekts an der Position ermöglicht eine sichere Klassierung des Objekts.

Die vorliegende Erfindung schafft ein Verfahren zum Unterscheiden eines selbstleuchtenden Objekts von einem reflektierenden Objekt in einem Erfassungsbereich einer Kamera eines Fahrzeugs mit zumindest einem Scheinwerfer, wenn das Objekt von dem Scheinwerfer angestrahlt wird; wobei das Verfahren die folgenden Schritte umfasst:
Empfangen einer Relativposition des Objekts zu dem Fahrzeug und eines Helligkeitswerts des Objekts von der Kamera;
Vergleichen des Helligkeitswerts mit einem an der Relativposition erwarteten Selbstleuchtewert und/oder einem an der Relativposition erwarteten Reflexionswert; und
Klassieren des Objekts als selbstleuchtend, wenn sich der Helligkeitswert innerhalb eines Selbstleuchte-Toleranzbereichs um den Selbstleuchtewert befindet oder als reflektierend, wenn sich der Helligkeitswert innerhalb eines Reflexions-Toleranzbereichs um den Reflexionswert befindet.

Weiterhin schafft die vorliegende Erfindung eine Vorrichtung zum Unterscheiden eines selbstleuchtenden Objekts von einem reflektierenden Objekt in einem Erfassungsbereich einer Kamera eines Fahrzeugs mit zumindest einem Scheinwerfer, wenn das Objekt von dem Scheinwerfer angestrahlt wird; wobei die Vorrichtung die folgenden Merkmale aufweist:
eine Einrichtung zum Empfangen einer Relativposition des Objekts zu dem Fahrzeug und zum Empfangen eines Helligkeitswerts des Objekts von der Kamera;
eine Einrichtung zum Vergleichen des Helligkeitswerts mit einem an der Relativposition erwarteten Selbstleuchtewert und/oder einem an der Relativposition erwarteten Reflexionswert; und
eine Einrichtung zum Klassieren des Objekts als selbstleuchtend, wenn sich der Helligkeitswert innerhalb eines Selbstleuchte-Toleranzbereichs um den Selbstleuchtewert befindet oder als reflektierend, wenn sich der Helligkeitswert innerhalb eines Reflexions-Toleranzbereichs um den Reflexionswert befindet. Auch durch diese Ausführungsvariante der Erfindung in Form einer Vorrichtung kann die der Erfindung zugrunde liegende Aufgabe schnell und effizient gelöst werden.

Unter einem selbstleuchtenden Objekt kann eine Lichtquelle mit eigener Energieversorgung verstanden werden. Beispielsweise kann ein selbstleuchtendes Objekt ein Scheinwerfer eines Fremdfahrzeugs oder eine Straßenlaterne oder eine Leuchtreklame sein. Unter einem reflektierenden Objekt kann ein Gegenstand verstanden werden, der einfallendes Licht zumindest zu einem Anteil wieder zu seiner Quelle zurückstrahlt. Beispielsweise kann das reflektierende Objekt eine Fahrbahnmarkierung, ein Verkehrsschild oder ein Reflektor eines Straßenbegrenzungspfostens sein. Eine Relativposition kann eine Koordinate des Objekts in einer Bildinformation einer Kamera sein. Da die Kamera fahrzeugfest angeordnet ist, zeigt die Bildinformation einen Erfassungsbereich der Kamera, der in einem festen Winkel zum Fahrzeug ausgerichtet ist. Eine Lichtverteilung des Scheinwerfers oder mehrerer Scheinwerfer, wie beispielsweise Fernlicht oder Abblendlicht weist in dem Kamerabild in vorbestimmten Bereichen jeweils eine feste Beleuchtungsstärke auf. Abhängig von der Relativposition zu dem Fahrzeug und einer Ausrichtung zum Fahrzeug weist ein reflektierendes Objekt in den Bereichen der Lichtverteilung einen Erwartungswert der Helligkeit, einen erwarteten Reflexionswert auf. Ebenso weist ein selbstleuchtendes Objekt einen Erwartungswert der Helligkeit, einen erwarteten Selbstleuchtewert abhängig von der Relativposition zum Fahrzeug und einer Ausrichtung des Selbstleuchtenden Objekts zum Fahrzeug auf. Die Werte sind an je einer gemeinsamen Relativposition zum Fahrzeug voneinander verschieden. Ein Toleranzbereich kann eine Schwankungsbreite z.B. aufgrund verschiedener Umweltbedingungen repräsentieren.

Unter einer Vorrichtung kann vorliegend ein elektrisches Gerät verstanden werden, das Sensorsignale verarbeitet und in Abhängigkeit davon Steuersignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Weiterhin kann das Verfahren einen vorausgehenden Schritt des Ermittelns aufweisen, in dem eine Funktion von zu erwartenden Selbstleuchtewerten an unterschiedlichen Relativpositionen vor dem Fahrzeug und/oder eine Funktion von zu erwartenden Reflexionswerten an unterschiedlichen Relativpositionen vor dem Fahrzeug ermittelt werden. Der Schritt des Ermittelns kann direkt am Fahrzeug durchgeführt werden, beispielswiese als eine Art Kalibirierung. Ebenso kann der Schritt des Ermittelns in einem Labor durchgeführt werden und die zu erwartenden Selbstleuchtewerte und/oder die zu erwartenden Reflexionswerte als Datensatz in vielen Fahrzeugen mit einheitlicher Fahrzeugbeleuchtung verwendet werden. Aufgrund des Ermittelns kann eine höhere Genauigkeit erreicht werden, als durch eine Simulation.

Im Schritt des Empfangens kann ansprechend auf ein Bewegen des Fahrzeugs ferner eine weitere Relativposition des Objekts zu dem Fahrzeug und ein weiterer Helligkeitswert des Objekts empfangen werden, und im Schritt des Vergleichens kann ferner der weitere Helligkeitswert mit einem an der weiteren Relativposition erwarteten weiteren Selbstleuchtewert und/oder einem an der weiteren Relativposition erwarteten weiteren Reflexionswert verglichen werden, und im Schritt des Klassierens kann ferner das Objekt als selbstleuchtend klassiert werden, wenn sich der weitere Helligkeitswert innerhalb eines weiteren Selbstleuchte-Toleranzbereichs um den weiteren Selbstleuchtewert befindet oder das Objekt als reflektierend klassiert werden, wenn sich der weitere Helligkeitswert innerhalb eines weiteren Reflexions-Toleranzbereichs um den weiteren Reflexionswert befindet. Durch einen zweiten Helligkeitswert desselben Objekts zu einem zweiten Zeitpunkt, nachdem sich das Fahrzeug bewegt hat, kann mit einer höheren Sicherheit zwischen einem reflektierenden Objekt und einem selbstleuchtenden Objekt unterschieden werden.

Ferner kann im Schritt des Vergleichens ein Gradient zwischen dem Helligkeitswert und dem weiteren Helligkeitswert mit einem zwischen der Relativposition und der weiteren Relativposition erwarteten Selbstleuchte-Gradient und/oder einem zwischen der Relativposition und der weiteren Relativposition erwarteten Reflexions-Gradient verglichen werden, und im Schritt des Klassierens kann das Objekt ferner als selbstleuchtend klassiert werden, wenn sich der Gradient innerhalb eines Selbstleuchte-Gradient-Toleranzbereichs um den Selbstleuchte-Gradient befindet, oder das Objekt als reflektierend klassiert werden, wenn sich der Gradient innerhalb eines Reflexions-Gradient-Toleranzbereichs um den Reflexions-Gradient befindet. Durch eine Betrachtung eines Gradienten zwischen zwei Messwerten kann ein Abschnitt einer Erwartungs-Kurve gefunden werden, der den gleichen Gradienten aufweist. Durch einen Gradientenvergleich kann die Relativposition des Objekts zu dem Fahrzeug bestätigt werden.

Ferner kann der Schritt des Klassierens nicht ausgeführt werden, wenn im SChritt des Vergleichens erkannt wurde, dass der Helligkeitswert kleiner als ein vorbestimmter Schwellenwert ist. Ein Schwellwert kann einen Rechenaufwand zur Erkennung verringern, indem beispielsweise kein natürliches Umgebungslicht berücksichtigt wird.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programm auf einem Computer oder einer Vorrichtung ausgeführt wird.

Die Erfindung wird nachstehend anhand der beigefügten Zeichnungen beispielhaft näher erläutert. Es zeigen:
- Fig. 1: eine Darstellung eines Fahrzeugs mit einer Vorrichtung zum Unterscheiden eines selbstleuchtenden Objekts von einem reflektierenden Objekt gemäß einem Ausführungsbeispiel der vorliegenden Erfindung;
- Fig. 2: ein Ablaufdiagramm eines Verfahrens zum Unterscheiden eines selbstleuchtenden Objekts von einem reflektierenden Objekt gemäß einem Ausführungsbeispiel der vorliegenden Erfindung;
- Fig. 3: ein Abbild einer Helligkeitsverteilung aus einem Blickwinkel der Kamera aus Fig. 1;
- Fig. 4: eine Draufsicht auf die Helligkeitsverteilung aus Fig. 3; und
- Fig. 5: Diagramm dreier Kennlinien für zu erwartende Helligkeitswerte gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

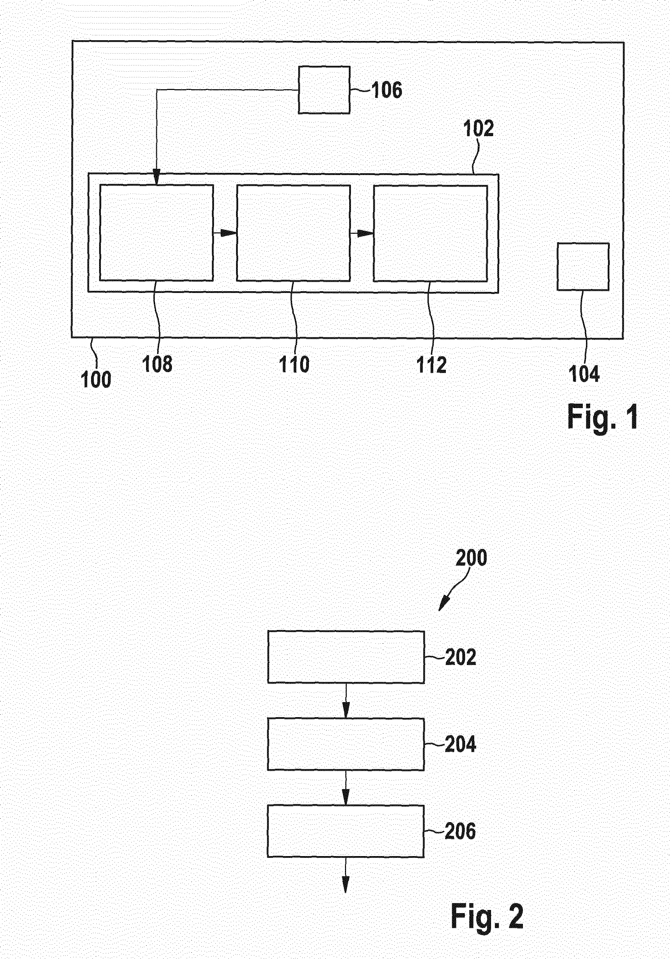

Fig. 1 zeigt eine Darstellung eines Fahrzeugs 100 mit einer Vorrichtung 102 zum Unterscheiden eines selbstleuchtenden Objekts von einem reflektierenden Objekt gemäß einem Ausführungsbeispiel der vorliegenden Erfindung. Das Fahrzeug 100 weist zumindest einen Scheinwerfer 104 und eine Kamera 106 auf. Die Vorrichtung 102 weist eine Einrichtung zum Empfangen 108, eine Einrichtung zum Vergleichen 110 sowie eine Einrichtung zum Klassieren 112 auf. Die Kamera 106 ist dazu ausgebildet, ein Abbild eines Erfassungsbereichs der Kamera 106 bereitzustellen, wobei das Objekt von dem Scheinwerfer 104 angestrahlt wird. Die Einrichtung zum Empfangen 108 ist dazu ausgebildet, eine Relativposition des Objekts zu dem Fahrzeug 100 und einen Helligkeitswerts des Objekts von der Kamera zu empfangen. Die Einrichtung zum Vergleichen 110 ist dazu ausgebildet den Helligkeitswert mit einem an der empfangenen Relativposition erwarteten Selbstleuchtewert und einem an der empfangenen Relativposition erwarteten Reflexionswert zu vergleichen. Die Einrichtung zum Klassieren 112 des Objekts ist dazu ausgebildet, das Objekt als selbstleuchtend zu klassieren, wenn sich der Helligkeitswert innerhalb eines Selbstleuchte-Toleranzbereichs um den Selbstleuchtewert befindet oder als reflektierend zu klassieren, wenn sich der Helligkeitswert innerhalb eines Reflexions-Toleranzbereichs um den Reflexionswert befindet.

Fig. 2 zeigt ein Ablaufdiagramm eines Verfahrens 200 zum Unterscheiden eines selbstleuchtenden Objekts von einem reflektierenden Objekt gemäß einem Ausführungsbeispiel der vorliegenden Erfindung. Das Verfahren 200 kann auf einer Vorrichtung wie sie in Fig. 1 gezeigt ist ausgeführt werden. Das Verfahren zum Unterscheiden eines selbstleuchtenden Objekts von einem reflektierenden Objekt in einem Erfassungsbereich einer Kamera eines Fahrzeugs mit zumindest einem Scheinwerfer weist einen Schritt des Empfangens 202, einen Schritt des Vergleichens 204 sowie einen Schritt des Klassierens auf. Der zumindest eine Scheinwerfer ist aktiviert und emittiert Licht in Richtung des Objekts. Im Schritt des Empfangens 202 werden eine Relativposition des Objekts zu dem Fahrzeug und ein Helligkeitswert des Objekts von der Kamera empfangen. Im Schritt des Vergleichens 204 wird der Helligkeitswert mit einem an der Relativposition erwarteten Selbstleuchtewert und/oder einem an der Relativposition erwarteten Reflexionswert verglichen. Im Schritt des Klassierens 206 wird das Objekt als selbstleuchtend klassiert, wenn sich der Helligkeitswert innerhalb eines Selbstleuchte-Toleranzbereichs um den Selbstleuchtewert befindet oder als reflektierend klassiert, wenn sich der Helligkeitswert innerhalb eines Reflexions-Toleranzbereichs um den Reflexionswert befindet.

Der hier vorgestellte Ansatz bezieht sich auf die Berücksichtigung der aktiven bzw. passiven Veränderung der Lichtverteilung des durch mindestens einen Scheinwerfer eines Fahrzeuges abgestrahlten Lichtes. Die Information über die Veränderung kann z.B. vorteilhaft für die Unterscheidung von selbstleuchtenden und reflektierenden Objekten verwendet werden.

Eine Berücksichtigung der Lichtverteilung im statischen Fall bzw. ohne Veränderung der Lichtverteilung durch eine Eigenbewegung des Fahrzeuges oder des Scheinwerfers lässt keine valide Differenzierung zwischen beleuchteten bzw. reflektierenden Objekten und selbstleuchtenden Objekten zu. Erst durch die Ausnutzung der Information über die aktive bzw. passive Veränderung der Lichtverteilung lässt sich dieses Merkmal zur Differenzierung sinnvoll verwenden.

Eine abstrahierte Kenntnis über die aktuelle Lichtverteilung sowie deren u.U. situationsabhängige Veränderung (z.B. Landstraßenlicht. Autobahnlicht, Kreuzungslicht oder dynamisches Kurvenlicht) wird vorausgesetzt. D.h., es wird davon ausgegangen, dass bekannt ist, in welchen Bereichen des aufgenommenen Bildes Objekte potentiell mit dem eigenen Scheinwerferlicht aktiv beleuchtet werden können und vor allem wie stark bzw. ausgeprägt diese Beleuchtung ist. Desweiteren wird angenommen, dass eine definierte bzw. ableitbare Veränderung von Objektmerkmalen in Abhängigkeit von der aktiven Beleuchtung der Objekte (reflektierende, nicht selbstleuchtende Objekte) detektierbar ist, d.h., die Veränderung von z.B. der Helligkeit ist auf Basis der aktiven bzw. passiven Veränderung der Lichtverteilung in Toleranzen prädizierbar. Weiterhin wird angenommen, dass bei selbstleuchtenden Objekten die relative Konstanz bzw. definierte (u.U. auch zyklische) Veränderung von Objektmerkmalen wie z.B. der detektierbaren Helligkeit eines Objektes oder auch der spektralen Zusammensetzung des detektierbaren Lichtes, nicht anhand der Veränderung der Lichtverteilung prädizierbar ist. Für eine Unterscheidung zwischen selbstleuchtenden und reflektierenden Objekten wird genau dieser Unterschied, d.h., die Prädizierbarkeit zu erwartender Veränderung (Dynamik der Szene) ausgenutzt, um eine valide Differenzierung zwischen selbstleuchtenden und reflektierenden Objekten zu gewährleisten.

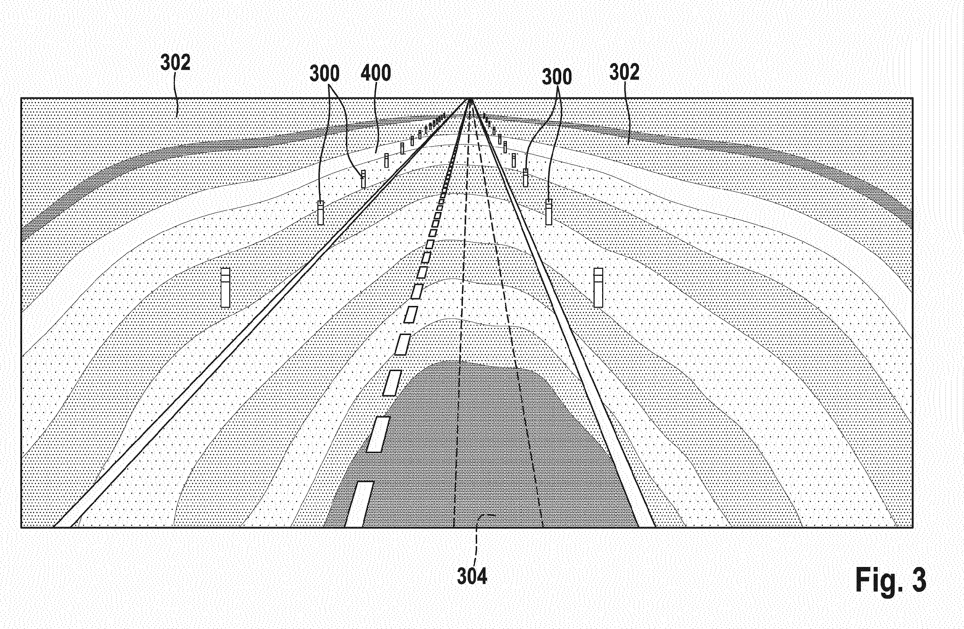

Fig. 3 zeigt ein Abbild einer Helligkeitsverteilung aus einem Blickwinkel der Kamera aus Fig. 1. Vor dem Fahrzeug erstreckt sich eine Straße mit weißen Seitenbegrenzungslinien und einer unterbrochenen Mittellinie. Es ist beispielhaft die Lichtverteilung im Fernlicht skizziert. Die Lichtverteilung ist durch eine Schar Isoluxlinien repräsentiert, die Punkte gleicher Beleuchtungsstärke verbinden. Bereiche zwischen den Isoluxlinien sind in unterschiedlichen Grautönen schattiert. Zusätzlich sind Leitpfosten 300 im geschätzten Abstand von jeweils 50 m zueinander eingezeichnet. Anhand dieser Skizze lässt der vorgeschlagene Ansatz gut zeigen. Weit entfernte Leitpfosten 300 als Beispiel für reflektierende Objekte können im Bereich geringer Beleuchtungsstärke 302 erstmals detektiert werden. Das Fahrzeug bewegt sich vorwärts. Darum "bewegen" sich die reflektierenden Objekte 300 scheinbar relativ zum Fahrzeug durch die nachfolgenden Bereiche bis hin zum Bereich mit maximal detektierbarer Beleuchtungsstärke 304, um abschließend wieder in Bereichen mit geringerer Beleuchtungsstärke detektiert zu werden.

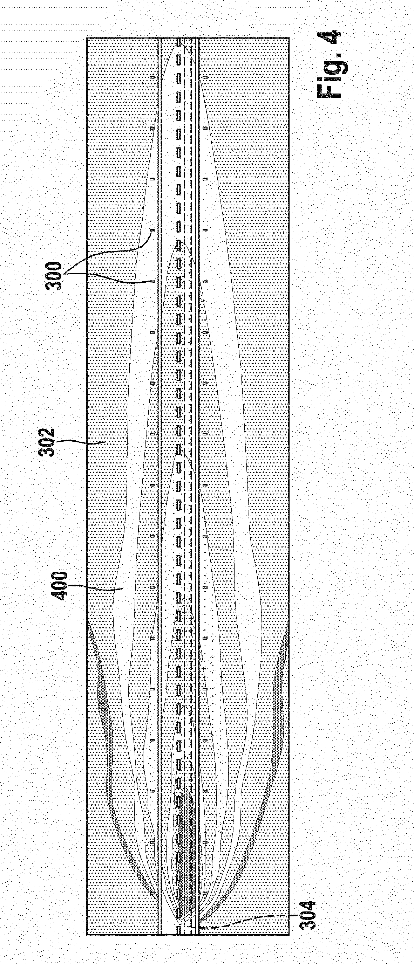

Fig. 4 zeigt eine Draufsicht auf die Helligkeitsverteilung aus Fig. 3. Es ist eine angenommene Lichtverteilung für Xenon-Scheinwerfer im Fernlichtbetrieb aus der Perspektive skizziert. Bereiche mit annähernd gleicher Beleuchtungsstärke sind dabei mit dem gleichen Grauton schattiert. Der Bereich 302 entspricht hier z.B. einer angenommenen Beleuchtungsstärke von 1 Ix, der Bereich 400 von 3 Ix, und der Bereich 304 einer angenommenen Beleuchtungsstärke von 110 Ix.

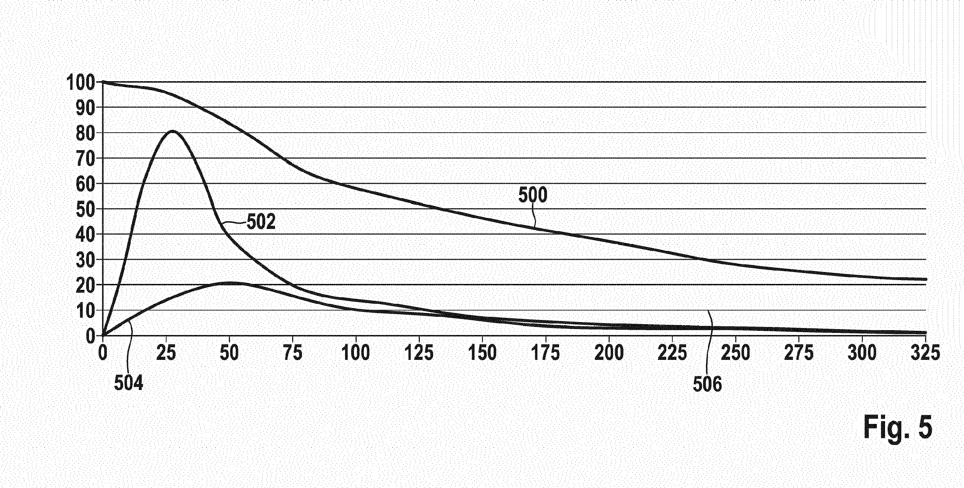

Fig. 5 zeigt ein Diagramm dreier Kennlinien für zu erwartende Helligkeitswerte gemäß einem Ausführungsbeispiel der vorliegenden Erfindung. Es ist ein "zeitlicher" Verlauf dreier statischer Objekte als Referenzobjekte durch die Lichtverteilung aus Fig. 3 und Fig. 4 schematisch skizziert, während das Fahrzeug vorwärts fährt. Auf der Abszisse des Diagramms ist eine Entfernung vom Fahrzeug in Metern angetragen. Auf der Ordinate ist eine wahrnehmbare Leuchtstärke in Prozent angetragen. Während die Kennlinie 500 der Veränderung der gemessenen (normierten) Helligkeit eines selbstleuchtenden Objektes entspricht, charakterisieren die Kennlinien 502 und 504 die Veränderung der Helligkeit eines reflektierenden Objektes mit einem lateralen Abstand von 5 m (504) bzw. 10 m (502) zu einer Fahrzeuglängsachse. Die gestrichelte Linie 506 definiert hier die Detektionsschwelle, d.h., unterhalb dieser Schwelle 506 liegende Objekte werden nicht berücksichtigt bzw. klassifiziert. Die Kennlinie 500 fällt von 100% Helligkeit bei null Meter mit leicht veränderlicher Steigung bis auf einen Wert von 20% bei 325 Meter. Die Kennlinie 502 steigt vom Ursprung steil bis auf einen Hochpunkt bei 80% Helligkeit bei 25 Metern und fällt danach wieder steil ab. Mit größer werdendem Abstand nähert sich die Kennlinie mit fortwährend flacher werdender Steigung null Prozent Helligkeit bei 325 Metern. Die Kennlinie 504 steigt vom Ursprung flach bis auf einen Hochpunkt bei 20% bei 50 Metern, um danach ebenfalls asymptotisch auf null Prozent bei 325 Meter zu sinken. Während sich die Änderung verschiedener Merkmale selbstleuchtender Objekte, hier am Beispiel der detektierbaren Helligkeit skizziert, proportional zur Veränderung der Entfernung verhält (zurückgelegter Weg des Fahrzeugs), ist einerseits das Merkmal selbst wesentlich später detektierbar, andererseits ist die Änderung der Merkmale für reflektierende Objekte wesentlich signifikanter, d.h. der Anstieg in Relation zu einer Bezugsgröße vorzugsweise dem zurückgelegten Weg wesentlich steiler bis zu einem bestimmten Punkt. Danach nimmt die Ausprägung des Merkmals kontinuierlich wieder ab, während im Gegensatz zu selbstleuchtenden Objekten das letztgenannte Verhalten nicht vorhanden ist. So z.B. ist die Veränderung eines detektierbaren Merkmals entweder signifikant größer als ein vorab definierter Schwellwert oder entsprechend kleiner.

Ein Einfluss von z.B. dynamischem Kurvenlicht oder anderen möglichen Lichtverteilungen auf die prädizierbare Veränderung der Merkmale lassen sich bei der Unterscheidung zwischen selbstleuchtenden und reflektierenden Objekten entsprechend berücksichtigen.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden.

Ferner können erfindungsgemäße Verfahrensschritte wiederholt sowie in einer anderen als in der beschriebenen Reihenfolge ausgeführt werden.

## Patentansprüche

1. Verfahren (200) zum Unterscheiden eines selbstleuchtenden Objekts von einem reflektierenden Objekt (300) in einem Erfassungsbereich einer Kamera (106) eines Fahrzeugs (100) mit zumindest einem Scheinwerfer (104), wenn das Objekt von dem Scheinwerfer (104) angestrahlt wird; wobei das Verfahren (200) die folgenden Schritte umfasst:
Empfangen (202) einer Relativposition des Objekts zu dem Fahrzeug (100) und eines Helligkeitswerts des Objekts von der Kamera (106);
Vergleichen (204) des Helligkeitswerts mit einem an der Relativposition erwarteten Selbstleuchtewert und/oder einem an der Relativposition erwarteten Reflexionswert; und
Klassieren (206) des Objekts als selbstleuchtend, wenn sich der Helligkeitswert innerhalb eines Selbstleuchte-Toleranzbereichs um den Selbstleuchtewert befindet oder als reflektierend, wenn sich der Helligkeitswert innerhalb eines Reflexions-Toleranzbereichs um den Reflexionswert befindet.

2. Verfahren (200) gemäß Anspruch 1, mit einem vorausgehenden Schritt des Ermittelns von einer Funktion von zu erwartenden Selbstleuchtewerten an unterschiedlichen Relativpositionen vor dem Fahrzeug und/oder einer Funktion von zu erwartenden Reflexionswerten an unterschiedlichen Relativpositionen vor dem Fahrzeug.

3. Verfahren (200) gemäß einem der vorangegangenen Ansprüche, bei dem im Schritt des Empfangens (202) ansprechend auf ein Bewegen des Fahrzeugs (100) ferner eine weitere Relativposition des Objekts zu dem Fahrzeug (100) und ein weiterer Helligkeitswert des Objekts empfangen werden, und im Schritt des Vergleichens (204) ferner der weitere Helligkeitswert mit einem an der weiteren Relativposition erwarteten weiteren Selbstleuchtewert und/oder einem an der weiteren Relativposition erwarteten weiteren Reflexionswert verglichen werden, und im Schritt des Klassierens (206) ferner das Objekt als selbstleuchtend klassiert wird, wenn sich der weitere Helligkeitswert innerhalb eines weiteren Selbstleuchte-Toleranzbereichs um den weiteren Selbstleuchtewert befindet oder das Objekt als reflektierend klassiert wird, wenn sich der weitere Helligkeitswert innerhalb eines weiteren Reflexions-Toleranzbereichs um den weiteren Reflexionswert befindet.

4. Verfahren (200) gemäß Anspruch 3, bei dem im Schritt des Vergleichens (206) ferner ein Gradient zwischen dem Helligkeitswert und dem weiteren Helligkeitswert mit einem zwischen der Relativposition und der weiteren Relativposition erwarteten Selbstleuchte-Gradient und/oder einem zwischen der Relativposition und der weiteren Relativposition erwarteten Reflexions-Gradient verglichen werden, und im Schritt des Klassierens (206) das Objekt ferner als selbstleuchtend klassiert wird, wenn sich der Gradient innerhalb eines Selbstleuchte-Gradient-Toleranzbereichs um den Selbstleuchte-Gradient befindet, oder das Objekt als reflektierend klassiert wird, wenn sich der Gradient innerhalb eines Reflexions-Gradient-Toleranzbereichs um den Reflexions-Gradient befindet.

5. Verfahren (200) gemäß einem der vorangegangenen Ansprüche, bei dem der Schritt des Klassierens (206) nicht ausgeführt wird, , wenn im Schritt des Vergleichens (204) erkannt wurde, dass der Helligkeitswert kleiner als ein vorbestimmter Schwellenwert (506) ist.

6. Vorrichtung (102) zum Unterscheiden eines selbstleuchtenden Objekts von einem reflektierenden Objekt (300) in einem Erfassungsbereich einer Kamera (106) eines Fahrzeugs (100) mit zumindest einem Scheinwerfer (104), wenn das Objekt von dem Scheinwerfer (104) angestrahlt wird; wobei die Vorrichtung (102) die folgenden Merkmale aufweist:
eine Einrichtung zum Empfangen (108) einer Relativposition des Objekts zu dem Fahrzeug (100) und zum Empfangen eines Helligkeitswerts des Objekts von der Kamera (106);
eine Einrichtung zum Vergleichen (110) des Helligkeitswerts mit einem an der Relativposition erwarteten Selbstleuchtewert und/oder einem an der Relativposition erwarteten Reflexionswert und
eine Einrichtung zum Klassieren (112) des Objekts als selbstleuchtend,
wenn sich der Helligkeitswert innerhalb eines Selbstleuchte-Toleranzbereichs um den Selbstleuchtewert befindet oder als reflektierend,
wenn sich der Helligkeitswert innerhalb eines Reflexions-Toleranzbereichs um den Reflexionswert befindet.

7. Computer-Programmprodukt mit Programmcode zur Durchführung des Verfahrens nach einem der Ansprüche 1 bis 5, wenn das Programm auf einer Vorrichtung ausgeführt wird.
